# EUROPÄISCHE PATENTSCHRIFT

(11) **EP 1 487 927 B1**
(45) Veröffentlichungstag und Bekanntmachung des Hinweises auf die Patenterteilung: **31.08.2005**
(21) Anmeldenummer: 03743864.5
(22) Anmeldetag: 11.03.2003
(51) Int. Cl.: C09C 1/02, C01F 11/18

(54) **VERFAHREN ZUR HERSTELLUNG VON GEFÄLLTEM CALCIUMCARBONAT MIT HOHEM WEISSGRAD**
METHOD FOR THE PRODUCTION OF PRECIPITATED CALCIUM CARBONATE WITH A HIGH DEGREE OF BRIGHTNESS
PROCEDE POUR PRODUIRE DU CARBONATE DE CALCIUM PRECIPITE A HAUT DEGRE DE BLANCHEUR

(30) Priorität: 14.03.2002 DE 10211292
(43) Veröffentlichungstag der Anmeldung: 22.12.2004
(73) Patentinhaber: BASF Aktiengesellschaft, 67056 Ludwigshafen (DE)
(72) Erfinder: MISSKE, Andrea, 67346 Speyer (DE); SCHNEIDER, Reinhard, 67136 Fussgönheim (DE)
(86) Internationale Anmeldenummer: PCT/EP2003/002454
(87) Internationale Veröffentlichungsnummer: WO 2003/076522

(56) Entgegenhaltungen:
- EP-A- 0 197 327
- WO-A-02/064505
- DE-A- 19 629 453

## Beschreibung

Die vorliegende Erfindung betrifft ein Verfahren zur Herstellung von gefälltem Calciumcarbonat mit hohem Weißgrad. Gefälltes Calciumcarbonat (oft mit dem Akronym "PCC" des entsprechenden englischen Begriffs "precipitated calcium carbonate" bezeichnet) ist ein wichtiges anorganisches Massenprodukt, dessen Hauptanwendungsgebiet die Verwendung als Füll- und Streichpigment bei der Papierherstellung ist. PCC wird auch in zahlreichen anderen Anwendungsgebieten eingesetzt, beispielsweise als Pigment oder Füllstoff in Kosmetika, Kunststoffen, Farben und Lacken.

J.A.H. Oates gibt in: "Lime and Limestone: Chemistry and Technology, Production and Uses", Wiley-VCH, Weinheim 1998 (ISBN 3-527-29527-5), einen Überblick über die Chemie und Technologie von Kalkstein, Kalk und ihren Folgeprodukten wie PCC. Für letzteres sind dort insbesondere die Abschnitte 12.9 (S. 109, Verwendung) und 31.2 (S. 352-354, Herstellung) einschlägig. Kalkstein ("limestone") ist der Sammelbegriff für natürliche Vorkommen von Calciumcarbonat, das überwiegend in Form des Minerals Calcit auftritt. Außer Kalkstein gehören auch Marmor (hydrothermal rekristallisierter Calcit) und Kreide (Calciumcarbonat-Sediment), die im Rahmen der hier vorliegenden Erfindung wie Kalkstein verarbeitet werden können, zu diesen Vorkommen. Kalk ("lime") ist der Sammelbegriff für bestimmte Kalkstein-Folgeprodukte, insbesondere umfasst der Begriff das Calcinierungsprodukt von Kalkstein, gebrannten Kalk (Synonyme sind Branntkalk, Calx, Ätzkalk, englisch "quicklime"; chemisch ist der Stoff Calciumoxid) und das Umsetzungsprodukt von gebranntem Kalk mit Wasser, gelöschten Kalk ("slaked lime", in fester Form wird dieser auch als "Kalkhydrat" ("hydrated lime"), als mit Wasser angeteigte Paste "Kalkbrei" ("lime putty") und in wässriger Suspension als "Kalkmilch" ("milk of lime") bezeichnet, chemisch ist der Stoff Calciumhydroxid). Calcium ist in Kalkstein und in dessen Folgeprodukten oft auch zumindest teilweise durch Magnesium substituiert.

PCC wird üblicherweise dann verwendet, wenn gemahlener Kalkstein (Schlämmkreide, engl. "whiting") dem Anforderungsprofil für die gegebene Anwendung nicht entspricht. Bei der Herstellung von PCC können unter anderem Morphologie und Teilchengrößenverteilung der Partikel und ihr Verunreinigungsgrad in gewünschter Weise beeinflusst werden. Industriell hergestellt wird PCC üblicherweise durch Umsetzung von Kalkmilch mit Kohlendioxid. Die industriell verwendeten Verfahren gehen typischerweise von gebranntem Kalk aus, der mit Wasser zu Kalkmilch umgesetzt wird. Diese Kalkmilch wird von die Weiterverarbeitung störenden, zu groben Partikeln befreit und anschließend mit einem Kohlendioxid enthaltenden Gas (etwa reines Kohlendioxid oder ein Kohlendioxid/Luft-Gemisch) umgesetzt, meist in einer Serie von Reaktoren unter genauer Kontrolle des pH-Werts, der Temperatur und des (Über-)Sättigungsgrads, um die gewünschte Morphologie und Teilchengrößenverteilung des PCC einzustellen. Die so hergestellte PCC-Suspension wird entweder als solche verwendet oder das PCC wird - meist nach einem Abfiltern zu grober Partikel - durch übliche Methoden der Abtrennung von Feststoffen aus Flüssigkeiten (beispielsweise Filtration, Zentrifugieren, Eindampfen) und Trocknung als Feststoff gewonnen. Die Partikelgröße kann, falls für die gegebene Anwendung erforderlich, in üblicher Weise verändert werden, beispielsweise durch Mahlen oder Agglomerieren. Das Verfahren kann auf verschiedene Weise in eine Kalksteinverarbeitung integriert (beispielsweise durch Verwendung der beim Kalkbrennen entstehenden CO₂-haltigen Abgase und/oder der Rauchgase des Kalkbrennofens, dessen festes Produkt zur Herstellung der Kalkmilch verwendet wird) oder modifiziert (beispielsweise durch Herstellung der Kalkmilch durch Dispergieren von Kalkhydrat in Wasser) werden. Es ist ebenso möglich, Calciumcarbonat, -oxid oder -hydroxid aus anderen Quellen als Kalkstein einzusetzen, beispielsweise sogenanntes Carbidkalkhydrat, ein Nebenprodukt aus der elektrothermischen Calciumcarbidherstellung aus Koks und Kalkstein.

WO 01/17905 und die darin zitierten Schriften offenbaren Verfahren zur Herstellung von PCC.

Ein wichtiges Qualitätsmerkmal für Kalkprodukte ist ihr Weißgrad ("brightness", seltener "whiteness"). Der Weißgrad wird in standardisierten Verfahren gemessen, beispielsweise nach DIN 5033 "Kolorimetrie", Teil 9 (1982) und DIN 53163 "Prüfung von Pigmenten und Füllstoffen" (1988) oder den entsprechenden internationalen Normen. Im wesentlichen wird dazu in einem Photometer der Reflexionsgrad von Licht einer bestimmten Wellenlänge (meist 457 nm) im Vergleich zu einem zu 100% Reflexionsgrad bestimmten Weiß-Standard (meist reines Bariumsulfat) gemessen. Der Weißgrad wird durch die im Kalkstein enthaltenen Verunreinigungen verringert. Typische Verunreinigungen im Kalkstein sind Quarz, Tonminerale, Feldspate, Pyrit, Hämatit, Kieselgesteine, Phosphate und Sulfate (Gips, Anhydrit), wobei der Weißgrad insbesondere durch Eisen- und Mangan enthaltende Verunreinigungen beeinträchtigt wird. Bei der Herstellung von PCC steigt der Weißgrad, verglichen mit dem Ausgangsmaterial Kalkstein an, unter anderem durch das Abfiltern von Verunreinigungen, die in Wasser nicht wie Calciumhydroxid in Kalkmilch suspendiert werden. Gemahlener Kalkstein aus vergleichsweise reinen Lagerstätten zeigt deshalb typischerweise Weißgrade im Bereich von 75 bis 95, PCC jedoch solche über 95.

Die Anforderungen an den Weißgrad von PCC sind hoch, insbesondere bei der Verwendung als Füllstoff oder Streichmittel zur Papierherstellung. Deshalb wird PCC oft auch mit Bleichmitteln behandelt.

Nach der Lehre von WO 96/20308 wird Füllstoff, insbesondere PCC enthaltendes Papier - während des Pressvorgangs nach der eigentlichen Entwässerung der Pulpe - mit einem Bleichmittel behandelt, das aus Wasserstoffperoxid, Natriumtetrahydroboranat und Natriumhydrosulfit gewählt wird. WO 85/05386 offenbart ein Verfahren zur Bleichung von Pulpe mit Wasserstoffperoxid, wobei - allerdings nicht als Füllstoff, sondern als basisches Hilfsmittel des Bleichvorgangs - Magnesiumcarbonate, aber auch Schlämmkreide zugesetzt werden. WO 99/32710 lehrt ein ähnliches Verfahren unter Verwendung einer Persäure als Bleichmittel.

EP-A-197 327 offenbart ein Verfahren zur Herstellung von PCC, bei dem der Kalkmilch Ammonium- oder Aminsalze zugesetzt werden, nach einer Filtration der Kalkmilch Aktivkohle zugesetzt wird, die danach ebenfalls wieder abfiltriert wird, und danach durch Einleiten von Kohlendioxid die Fällung von PCC vorgenommen wird. WO 99/61374 lehrt ein Verfahren zur Herstellung von PCC, wobei dem gefällten PCC ein Suspensionshilfsmittel zugegeben wird, das ein positives zeta-Potenzial des PCC bei einem pH-Wert von weniger als 9 einstellt, etwa eine Carbonsäure. Bei der Fällung des PCC kann ein Hilfsstoff zugesetzt werden, der aus der von Hydrazin, Hydroxylamin, löslichen Salzen des Hydroxylamins, löslichen Dithionitsalzen und ihren Mischungen gebildeten Gruppe gewählt wird.

Es ist jedoch auch bekannt, PCC mit reduzierenden Bleichmitteln zu behandeln. Durch derartige Bleichmittel werden vor allem die störenden Eisen- und Manganverbindungen zu löslichen Eisen- und Mangansalzen umgewandelt. So lehrt WO 99/61374 ein Verfahren zur Herstellung von PCC, bei dem der Kalkmilch vor der Fällung Natriumdithionit zugegeben wird. (Dithionite werden oft auch als "Hydrosulfite" bezeichnet.) US 4,900,533 offenbart die Fällung von PCC in im alkalischen pH-Bereich in Gegenwart von Natriumdithionit oder Zinkdithionit in einer Menge von 0,45 bis 9 kg pro Tonne PCC. Diese Verfahren haben den Nachteil, dass diese Dithionite instabile Verbindungen sind, die nur eingeschränkt lagerstabil sind und sich insbesondere in Kontakt mit Feuchtigkeit durchaus auch selbst entzünden können und daher schwierig handzuhaben sind. Außerdem beschränkt ihre Temperaturempfindlichkeit den anwendbaren Temperaturbereich. US 4,900,533 schränkt die im dort offenbarten Verfahren anzuwendende Temperatur wegen der Zersetzung der Dithionite bei höherer Temperatur explizit auf maximal 45°C ein. WO 99/61374 offenbart zwar allgemein Maximaltemperaturen bis zu 100°C, tatsächlich gearbeitet wird aber auch dort bei 40°C. Diese durch die Instabilität der Dithionite erzwungene Temperaturbegrenzung verlängert die erforderliche Reduktionsdauer und macht auch die Bleichung während der Fällung des PCC unmöglich, weil dabei durch die Exothermie der Fällung typischerweise Temperaturen deutlich oberhalb von 50°C auftreten, es sei denn, es werden - was wirtschaftlich nachteilig ist - Kühleinrichtungen eingesetzt.

JP-A-94/41 892 offenbart ein Verfahren zur Bleichung von gefälltem PCC oder insbesondere Calciumcarbonat aus der Kaustifizierung von Soda, bei dem das PCC oder Calciumcarbonat im Alkalischen mit Natrium- oder Zinkdithionit, Natriumtetrahydroboranat, Natriumsulfit, Natriumhydrogensulfit, Thioharnstoffdioxid (Synonym: "Formamidinsulfinsäure") oder Rongalit (nicht näher spezifiziert) behandelt wird. Rongalit® ist eine Marke der BASF Aktiengesellschaft und dient als Sammelbegriff zur Bezeichnung verschiedener Sulfinsäurederivate, die durch der Marke nachgestellte weitere Kennzeichen unterschieden werden. Die unter der Marke Rongalit vertriebenen Produkte werden insbesondere bei der Textilfärberei und beim Textildruck eingesetzt. Beispielsweise ist Rongalit C Natriumhydroximethansulfinat-Dihydrat, Rongalit H ist Calciumhydroximethansulfinat, weitere unter dieser Marke vertriebene Produkte sind oder waren etwa Rongalit ST, Rongalit DP, Rongalit DS, Rongalit 2 PH-A, Rongalit 2 PH-B, Rongalit CL, Rongalit CW, Rongalit BA und Rongalit FD (diese Liste ist nicht notwendigerweise vollständig; die Alkansulfonate/-sulfinate werden oft auch als "Alkylsulfonate/-sulfinate" bezeichnet, beispielsweise Natriumhydroximethansulfonat also auch als Natriumhydroximethylsulfonat). Wie auch in US 4,900,533 und WO 99/61374 wird gemäß der Lehre von JP-A-94/41 892 Natriumdithionit bei 40°C eingesetzt; alternativ wird das bekanntermaßen bei deutlich höherer Temperatur verwendbare Thioharnstoffdioxid bei 80°C verwendet. Aufgrund des zwar meist geringen, jedoch praktisch oft unvermeidlichen Restgehalts an Thioharnstoff, der als Stoff mit begründetem Verdacht auf krebserzeugendes Potential gilt, begegnet die Verwendung von Thioharnstoffdioxid zur Bleichung jedoch erheblichen Bedenken.

WO 98/03725 offenbart unter Anderem Verbindungen, die mit der folgenden Formel beschrieben werden können:

A [(CR¹R²)SOₚM_{(1/q)}]ᵣ,

wobei die Variablen
- A: NR³R⁴, NR³, N oder OH;
- unabhängig voneinander Wasserstoff oder einen R¹, R², R³, R⁴ organischen Rest;
- M: Ammonium oder Metall
- p: 2 oder 3;
- q: die Wertigkeit von M; und
- r: für A = OH oder NR³R⁴ 1, für A=NR³ 2 und für A = N 3;
bedeuten, und wobei diese Variablen, falls ein Gemisch von Verbindungen verwendet wird und/oder r = 2 oder 3 ist, für jede einzelne Verbindung und/oder jede [(CR¹R²)SOₚM_{(1/q)}]-Gruppe unabhängig voneinander gewählt werden, sowie die Herstellung solcher Verbindungen und ihre Verwendung zur reduktiven Nachreinigung bei der Färbung von Polyester enthaltenden Textilien.

Es besteht die Aufgabe, weitere einfache und kostengünstige Verfahren zur Herstellung von Calciumcarbonat mit möglichst hohem Weißgrad zu finden. Demgemäß wurde ein Verfahren zur Herstellung von Calciumcarbonat mit hohem Weißgrad durch reduktive Bleichung mittels mindestens eines Sulfin- und/oder Sulfonsäurederivats gefunden, das dadurch gekennzeichnet ist, dass man Calciumcarbonat und/oder die zu seiner Herstellung durch Umsetzung von Kalkmilch mit Kohlendioxid verwendete Kalkmilch und/oder mindestens eines der zur Herstellung der Kalkmilch verwendeten calciumhaltigen Vorprodukte vor, während und/oder nach dieser Umsetzung mit einem Bleichmittel behandelt, das mindestens eine Verbindung der Formel (I):

A[(CR¹R²)SOₚM_{(1/q)}]ᵣ (I)

enthält, wobei die Variablen
- A: NR³R⁴, NR³, N oder OH;
- R¹, R², R³, R⁴: unabhängig voneinander Wasserstoff oder einen organischen Rest;
- M: Ammonium oder Metall
- p: 2 oder 3;
- q: die Wertigkeit von M; und
- r: für A = OH oder NR³R⁴ 1, für A=NR³ 2 und für A = N 3;
bedeuten, und wobei diese Variablen, falls ein Gemisch von Verbindungen verwendet wird und/oder r = 2 oder 3 ist, für jede einzelne Verbindung und/oder jede [(CR¹R²)SOₚM_{(1/q)}]-Gruppe unabhängig voneinander gewählt werden.

Überraschenderweise führt die Bleichung mit diesen Sulfinsäurederivaten zu deutlich besseren Weißgraden als mit einer Hydrosulfitbleiche erreichbar ist. Mit dem erfindungsgemäßen Verfahren wird bei Anwendung größerer Mengen Sulfinsäurederivat auch ein höherer Weißgrad erzielt, im Gegensatz zur Hydrosulfitbleiche, bei der höhere Bleichmittelmengen nicht mehr zu einer weiteren Weißgraderhöhung führen. Zudem ist mit dem erfindungsgemäßen Verfahren das Arbeiten bei höheren Temperaturen ohne Zersetzung des Bleichmittels möglich, was die Reaktionsgeschwindigkeit der Bleichung und damit die Raumzeitausbeute erhöht.

Verbindungen und Verbindungsgemische der Formel (I) und ihre Herstellung sind bekannt. Sie sind beispielsweise in Ullmann's Encyclopedia of Industrial Chemistry, 5. Auflage, Band A 25, VCH Verlagsgesellschaft mbH (inzwischen: Wiley-VCH Verlag GmbH), Weinheim 1994 (ISBN 3-527-20100-9), Stichworte "Sulfinic Acid and Derivatives" (Seiten 461-476) und "Sulfonic Acids, Aliphatic" (Seiten 503-506), in WO 98/03725, und der in diesen Literaturstellen zitierten Literatur, auf die insgesamt hiermit ausdrücklich verwiesen wird, beschrieben.

Bei den Verbindungen der Formel (I) handelt es sich für p = 2 um Derivate der Sulfinsäure und für p = 3 um Derivate der Sulfonsäure. Falls zwei oder drei [(CR¹R²)SOₚM_{(1/q)}]-Gruppen an einem zentralen Stickstoffatom gebunden sind (A = NR³, N), und der Oxidationsgrad des Schwefels in diesen Gruppen unterschiedlich ist (d.h., p ist für die einzelnen (CR¹R²)SOₚM_{(1/q)}]-Gruppen im Molekül nicht identisch), handelt es sich um gemischte Sulfinate/Sulfonate.

In Formel (I) bedeutet A NR³R⁴, NR³, N oder OH. Für den Fall A = OH und demgemäß r = 1 handelt es sich bei den Verbindungen der Formel (I) um Hydroximethansulfinate oder -sulfonate. Falls A = NR³R⁴ und demgemäß r = 1 ist, werden die Verbindungen der Formel (I) üblicherweise als Aminomethansulfinate/-sulfonate bezeichnet, bei A = NR³ und entsprechend r = 2 als Iminomethansulfinate/-sulfonate, und bei A = N und demgemäß r = 3 als Nitrilomethansulfinate/-sulfonate.

R¹, R², R³ und R⁴ bedeuten unabhängig voneinander Wasserstoff oder einen organischen Rest. Als organischer Rest ist jeder unter den Reaktionsbedingungen des erfindungsgemäßen Verfahrens inerte Rest geeignet. Beispiele für geeignete organische Reste sind aliphatische, cycloaliphatische, aromatische, arylaliphatische oder heteroaromatische Reste wie Alkyl, Alkenyl, Alkinyl, Cycloalkyl, Cycloalkenyl, Aryl wie Phenyl, Alkylaryl oder Arylalkyl. Die Reste können mit weiteren organischen Resten substituiert sein und auch Heteroatome, zum Beispiel in Form von Alkoxisubstituenten, Estergruppen, Amino- oder Alkylaminofunktionen umfassen. Die Heteroatome wie Sauerstoff, Schwefel oder Stickstoff können auch Teil eines aromatischen oder cyclischen Rests sein. Die Reste können untereinander auch verknüpft sein und Teile von ein- oder mehrgliedrigen, einfachen oder polycyclischen Ringsystemen, zum Beispiel mit 4 bis 16 Kohlenstoffatomen, welche die eingebundenen Reste R¹ und R² und das C-Atom der betreffenden [(CR¹R²)SOₚM_{(1/q)}]-Gruppe und/oder die eingebundenen Reste R³ und R⁴ und das N-Atom der betreffenden NR³R⁴- Gruppe umfassen. Beispiele für geeignete organische Reste R sind C₁-C₂₀-Alkylreste, insbesondere C₁-C₆-Alkylreste, und C₃-C₈-Cycloalkylreste, wobei diese (Cyclo-)Alkylreste mit einem bis drei C₁-C₄-Alkylresten substituiert sein können, wie Methyl, Ethyl, 1-Propyl, 2-Propyl, 1-Butyl, 2-Butyl, 1-(2-Methyl)propyl, 1-(1,1-Dimethyl)ethyl, oder entsprechend lineare oder verzweigte Pentyl-, Hexyl-, oder längerkettige Reste wie etwa Eicosyl, oder Cyclopropyl, Cyclobutyl, Cyclopentyl, Cyclohexyl, Cycloheptyl, Cyclooctylreste, die wahlweise auch mit Alkylresten substituiert sein können. In bevorzugter Weise sind die Reste R¹, R², R³, und R⁴ Wasserstoff oder C₁-C₄-Alkyl, insbesondere Methyl oder Ethyl.

M bedeutet Ammonium oder Metall der Wertigkeit q. Ammonium ist R¹R²R³R⁴N, wobei für die Reste R die obigen Definitionen gelten. Vorzugsweise ist Ammonium NH₄⁺. Als Metall ist im Prinzip jedes Metall geeignet, das stabile Sulfinat- oder Sulfonatsalze bildet. Insbesondere werden als Metall die Alkalimetalle Li, Na, K, Rb und/oder Cs verwendet, die Erdalkalimetalle Mg, Ca, Sr und/oder Ba und/oder Zn. Bevorzugte Metalle sind Na, Ca und Zn.

q ist die Wertigkeit, also die Ionenladung des in der Verbindung der Formel (I) naturgemäß als Kation vorliegenden Metalls oder Ammoniums. Für Ammonium und die Alkalimetalle ist q = 1, für die Erdalkalimetalle und Zink ist q = 2. Werden andere Metalle verwendet, kann q auch höher sein. Wenn Metalle unterschiedlicher Wertigkeit im Gemisch eingesetzt werden, ist q für das jeweilige Metall spezifisch in die Formel (I) einzusetzen. Der Ladungsausgleich - jede (CR¹R²)SOₚ-Gruppe trägt naturgemäß eine einfach negative Ladung - kann, wenn q von 1 verschieden ist, intramolekular innerhalb eines Moleküls gemäß der Formel (I), wie beispielsweise in N[(CH₂)SO₂)₃NaCa, aber auch intermolekular zwischen mehreren Molekülen gemäß der Formel (I) erfolgen, im letzteren Fall teilen sich mehrere Moleküle gemäß der Formel A[(CR¹R²)SOₚM_{(1/q)}]ᵣ ein reales Metallion wie beispielsweise in [N(CH₂SO₂)₃]₂Ca₃. Die hier erstgenannte Beispielverbindung entspricht der allgemeinen Formel (I) als N[(CH₂)SO₂(Na_{1/1}Ca_{1/2})]₃, die zweitgenannte Verbindung entspricht der allgemeinen Formel (I) als N[(CH₂)SO₂Ca_{(1/2)}]₃.

Die Variable p bedeutet 2 oder 3. Falls p = 2, handelt es sich um ein Sulfinat oder eine Sulfinatgruppe, und falls p = 3 ist, um ein Sulfonat oder eine Sulfonatgruppe.

Technisch werden derartige Verbindungen bequem auf bekannte Weise durch Umsetzung von Dithionit S₂O₄M_{2/q} oder Hydrogensulfiten HSO₃M_{1/q} mit Ketonen R¹-CO-R² oder Aldehyden (R¹-CO-H oder Formaldehyd, R¹=R²=H) hergestellt. Dabei entstehen Hydroximethansulfonate und -sulfinate gemäß der allgemeinen Formel (I) und im speziellen gemäß der Formel HO-CR¹R²-SOₚM_{1/q}. Diese Sulfonate und Sulfinate werden wahlweise anschließend mit Ammoniak, primären Aminen R³NH₂ oder sekundären Aminen R³R⁴NH umgesetzt. Dabei entstehen unter Wasserabspaltung Kondensationsprodukte der Formel (I), bei denen das oder die Wasserstoffatom(e) am Ammoniak- oder Amin-Stickstoff ganz oder teilweise durch -CR¹R²-SOₚM_{1/q}-Gruppen ersetzt werden. Die bei der Herstellung vorgegebene Stöchiometrie der Einsatzstoffe und die gleichzeitige Zugabe oder die Einhaltung einer Zugabereihenfolge bestimmen in ganz offensichtlicher Weise die letztendlich entstehenden Verbindungen oder das letztendlich entstehende Verbindungsgemisch. Der Gehalt an Sulfinat- und Sulfonatgruppen ist analytisch leicht feststellbar, beispielsweise durch Redoxtritration. Typische Reaktionsbedingungen sind eine Temperatur von im Allgemeinen mindestens 20°C, vorzugsweise mindestens 40°C sowie im Allgemeinen höchstens 100°C, vorzugsweise höchstens 90°C, und eine Reaktionsdauer von im Allgemeinen mindestens 15 Minuten, vorzugsweise mindestens 30 Minuten sowie im Allgemeinen höchstens 10 Stunden, vorzugsweise höchstens 6 Stunden, und ein wässriges Reaktionsmedium. Der angewendete Reaktionsdruck ist nicht wesentlich, im Allgemeinen wird bei Normaldruck gearbeitet.

Die Sulfinate können auch durch Reduktion der entsprechenden Sulfonate gewonnen werden, beispielsweise durch katalytische Reduktion der Sulfonate mit Wasserstoff oder durch deren Reduktion mittels Zinkstaub. Die teilweise Reduktion von Sulfonaten ist eine weitere Methode zur Herstellung gemischter Sulfonate/Sulfinate.

Für manche Verbindungen der Formel (I) sind weitere spezielle Herstellverfahren bekannt. So wird beispielsweise Natriumhydroximethansulfinat HO-CH₂-SO₂Na üblicherweise durch Umsetzung von Sulfonylchlorid mit Natriumamalgam oder Natriumformiat hergestellt. Natriumhydroximethansulfinat - das normalerweise als Dihydrat vorliegt - ist auch eine gängige Handelsware und beispielsweise unter der Bezeichnung Rongalit®C von BASF Aktiengesellschaft, Ludwigshafen, Deutschland, oder in verschiedenen Handelsformen unter der Marke Brüggolit® von der L. Brüggemann KG, Heilbronn, Deutschland, erhältlich.

Es ist durchaus möglich, die Verbindung(en) der Formel (I) erst in situ, also in Gegenwart des PCC, der Kalkmilch oder der zu ihrer Herstellung verwendeten calciumhaltigen Einsatzstoffe herzustellen.

Für das erfindungsgemäße Verfahren bevorzugte Verbindungen oder Verbindungsgemische der Formel (I) sind i) Natriumhydroximethansulfinat und ii) das bei der Umsetzung von drei Äquivalenten eines Natriumhydroximethansulfinat/-sulfonatgemisches mit Ammoniak entstehende Gemisch von Nitrilomethansulfinat/-sulfonaten.

Das im erfindungsgemäßen Verfahren einzusetzende Bleichmittel enthält mindestens eine Verbindung der Formel (I). Dem Bleichmittel können weitere Komponenten zugesetzt werden, beispielsweise Füllmittel und/oder Hilfsstoffe wie etwa Trocknungsmittel, Puffersubstanzen, Staubbindemittel, Duftstoffe zur Maskierung unangenehmer Gerüche, Stabilisatoren und ähnliches. Derartige Zusätze sind für Reduktionsmittel auf Sulfinat- und Sulfonatbasis aus der Technologie der Textilfärberei bekannt und auch hier anwendbar. Insbesondere kann bei der erfindungsgemäßen Behandlung von Calciumcarbonat mit einem Bleichmittel vorteilhaft sein, bereits dem Bleichmittel einen Komplexbildner zuzusetzen. Dabei sind vor allem Citronensäure und/oder Oxalsäure und/oder ihre Salze bevorzugt, insbesondere ihre Alkali- und/oder Erdalkalisalze, beispielsweise ihre Natrium-, Kalium-, Magnesium und/oder Calciumsalze. Ein Zusatz von Dithionit ist zwar theoretisch möglich, bringt jedoch die oben genannten Nachteile der PCC-Bleiche mit Dithionit mit sich und unterbleibt daher im Normalfall. Es ist aber auch möglich, als Bleichmittel eine reine Verbindung der Formel (I) oder ein Gemisch von Verbindungen der Formel (I) einzusetzen, in diesem Fall besteht das Bleichmittel also aus einer oder mehreren Verbindungen der Formel (I). Es ist ebenso möglich, als Bleichmittel ein Gemisch einzusetzen, das neben einer oder mehreren Verbindungen der Formel (I) nur noch unvermeidliche Verunreinigungen und/oder in unwesentlichem Umfang absichtlich zugesetzte Komponenten wie etwa Hilfsstoffe enthält. In diesem Fall besteht das Bleichmittel also im wesentlichen aus einer oder mehreren Verbindungen der Formel (I).

Im erfindungsgemäßen Verfahren wird Calciumcarbonat und/oder die zu seiner Herstellung durch Umsetzung von Kalkmilch mit Kohlendioxid verwendete Kalkmilch und/oder mindestens eines der zur Herstellung der Kalkmilch verwendeten calciumhaltigen Vorprodukte vor, während und/oder nach dieser Umsetzung mit einem Bleichmittel, das mindestens eine Verbindung der Formel (I) enthält, behandelt, und dadurch reduktiv gebleicht. (Unter "Bleichmittel" wird im Folgenden ein Bleichmittel, das mindestens eine Verbindung der Formel (I) enthält, verstanden.) Beispielsweise wird Calciumcarbonat selbst (natürliches oder synthetisch hergestelltes Calciumcarbonat wie PCC), gebrannter Kalk oder Kalkmilch mit Bleichmittel behandelt. Im festen Zustand (bei Calciumcarbonat oder gebranntem Kalk) wird das Bleichmittel trocken eingesetzt, beispielsweise durch Vermischen mit dem zu bleichenden Feststoff oder gemeinsames Vermahlen, In flüssigem Zustand (Calciumcarbonat-Suspension oder Kalkmilch) wird das Bleichmittel üblicherweise der Suspension und/oder dem Suspensionsmittel zugegeben. Das Bleichmittel kann aber auch dem Feststoff zugemischt werden der anschließend suspendiert, oder im Fall von gebranntem Kalk, gelöscht wird. Im Falle von gebranntem Kalk ist die Bleichung in einer Suspension in einem inerten (daher notwendigerweise nichtwässrigen) Suspensionsmittel (beispielsweise Kohlenwasserstoffen) zwar möglich, jedoch im Allgemeinen wirtschaftlich uninteressant.

In einer bevorzugten Ausführungsform des erfindungsgemäßen Verfahrens wird Calciumcarbonat mit Bleichmittel behandelt. Die Herkunft des Calciumcarbonats und seine Reinheit sind dabei unerheblich. Beispielsweise wird gemahlener Kalkstein, Marmor, Kreide oder PCC verwendet. Zweckmäßigerweise wird beim erfindungsgemäßen Verfahren wie bei der Calciumcarbonatverarbeitung allgemein üblich zunächst durch Mahlung die für die gegebene Anwendung des Calciumcarbonats gewünschte Korngröße eingestellt, es sei denn, dass das verwendete Rohprodukt diese bereits aufweist. Das Calciumcarbonat wird - sofern ein Mahlschritt notwendig ist, vor, während oder nach diesem Mahlschritt - mit Bleichmittel behandelt. In den meisten Fällen ist die Behandlung des Calciumcarbonats mit Bleichmittel vor einem notwendigen Mahlschritt nicht sinnvoll, da dabei meist eine geringere Weißgraderhöhung beim fertigen Produkt erhalten wird als bei Behandlung des Calciumcarbonats während oder nach dem Mahlschritt. Vorzugsweise wird daher, sofern ein Mahlschritt notwendig ist, das Bleichmittel beim Mahlschritt zugesetzt, ansonsten wird das Calciumcarbonat direkt mit Bleichmittel behandelt. Das Calciumcarbonat kann dazu trocken mit dem Bleichmittel vermahlen oder vermischt werden, vorzugsweise wird jedoch eine Suspension des Calciumcarbonats mit Bleichmittel behandelt. Als Suspensionsmittel wird eine Flüssigkeit verwendet, vorzugsweise Wasser. Bequemerweise wird, sofern ein Mahlschritt notwendig ist, dieser als Nassmahlschritt vorgenommen und Bleichmittel beim Nassmahlschritt zugesetzt.

In einer anderen bevorzugten Ausführungsform des erfindungsgemäßen Verfahrens wird die reduktive Bleichung mit der Herstellung von Calciumcarbonat, insbesondere der Fällung von PCC durch Umsetzung von Kalkmilch mit Kohlendioxid, kombiniert. Dazu wird vor, während und/oder nach der Einleitung eines Kohlendioxid enthaltenden Gases in Kalkmilch dem Reaktionsgemisch Bleichmittel zugesetzt. Beispielsweise wird der Kalkmilch vor der Einleitung eines Kohlendioxid enthaltenden Gases Bleichmittel zugesetzt. Vorzugsweise wird der Kalkmilch vor dem Einleiten von Kohlendioxid ein Teil Bleichmittel zugesetzt, und ein weiterer Teil Bleichmittel wird dem Reaktionsprodukt nach dem Fällen des PCC zugesetzt. Bei dieser Ausführungsform wird zwangsweise in Suspension gearbeitet, da sowohl die Kalkmilch als auch die Reaktionsmischung während und nach der Einleitung von Kohlendioxid Suspensionen sind. Das Suspensionsmittel ist eine Flüssigkeit, vorzugsweise Wasser.

Der Feststoffgehalt der Suspension wird in beiden Ausführungsformen aus wirtschaftlichen Gesichtspunkten so gewählt, dass weder unnötig hohe Flüssigkeitsmengen umgewälzt werden müssen noch eine sehr schwer rühr- und förderbare Paste zu behandeln ist. Typische Feststoffgehalte der Suspensionen liegen im Bereich von mindestens 3 Gew.-% Calciumcarbonat, bezogen auf die Gesamtmasse der Suspension, vorzugsweise mindestens 5 Gew.-% und in besonders bevorzugter Weise mindestens 10 Gew.-% sowie im Allgemeinen höchstens 90 Gew.-%, vorzugsweise höchstens 50 Gew.-% und in besonders bevorzugter Weise höchstens 20 Gew.-%. Der Feststoffgehalt der beim erfindungsgemäßen, mit der PCC-Herstellung kombinierten Verfahren eingesetzten Kalkmilch wird entsprechend so gewählt, dass nach der Umsetzung die genannten Calciumcarbonat-Feststoffgehalte erreicht werden.

Bei der Behandlung des Calciumcarbonats oder der Kalkmilch mit Bleichmittel sind zu niedrige pH-Werte im Normalfall nachteilig, da Calciumcarbonat sich im sauren Bereich unter Kohlendioxidentwicklung zersetzt. Im Allgemeinen wird bei der Behandlung von bereits gefälltem PCC ein pH-Wert von mindestens 5, vorzugsweise mindestens 6 und nicht mehr als 9, vorzugsweise nicht mehr als 8 eingestellt. Bei der PCC-Fällung ist der AnfangspH-Wert der Kalkmilch stark basisch und sinkt im Verlauf der Fällung. Die Bleichung vor oder während der PCC-Fällung findet daher beim in der Fällmischung vorliegenden pH-Wert statt.

Es kann bei niedriger Temperatur gearbeitet werden; die Temperatur beträgt im Allgemeinen mehr als 10°C oder bevorzugt mehr als 20°C. Typischerweise ist auch jedoch dabei auch die Reaktionsgeschwindigkeit niedrig, was die Raumzeitausbeute verringert. In besonders bevorzugter Weise beträgt die Temperatur deshalb mindestens 50°C. Sie beträgt ferner im Allgemeinen höchstens 95°C und vorzugsweise höchstens 90°C. Es kann vorteilhaft sein, der Suspension einen Komplexbildner zuzusetzen, sofern dieser noch nicht im verwendeten Bleichmittel enthalten war. Wenn so verfahren wird, sind als Komplexbildner Citronensäure und/oder Oxalsäure und/oder ihre Salze bevorzugt, insbesondere ihre Alkali- und/oder Erdalkalisalze, beispielsweise ihre Natrium-, Kalium-, Magnesium und/oder Calciumsalze. All dies sind - mit Ausnahme der tendenziell höheren Bleichtemperatur und der Verwendung des erfindungsgemäßen Bleichmittels - auch übliche Parameter und Maßnahmen bei der technisch gängigen PCC-Herstellung oder bei der bekannten Hydrosulfitbleiche von Calciumcarbonat.

Die erfindungsgemäß verwendete Konzentration von Bleichmittel und die Behandlungsdauer werden so gewählt, dass die gewünschte Erhöhung des Weißgrades erreicht wird, aber keine dazu unnötig hohen Mengen Bleichmittel verbraucht werden oder unnötig viel Zeit verloren wird. Im Allgemeinen wird so viel Bleichmittel zugesetzt, das mindestens 0,1 Gramm Verbindung der Formel (I) oder Gemisch von Verbindungen der Formel (I) pro Kilogramm Calciumcarbonat, vorzugsweise mindestens 0,5 g/kg und in besonders bevorzugter Weise mindestens 0,7 g/kg sowie im Allgemeinen höchstens 200 g/kg, vorzugsweise höchstens 150 g/kg und in besonders bevorzugter Weise höchstens 100 g/kg verwendet werden. Entscheidend ist dabei der Gehalt des Bleichmittels an Sulfinatgruppen. Von einem Bleichmittel, das einen niedrigeren relativen Anteil Sulfinatgruppen aufweist, ist dementsprechend eine höhere Menge einzusetzen als von einem Bleichmittel mit einem höheren relativen Anteil an Sulfinatgruppen. Die Behandlungsdauer beträgt im Allgemeinen mindestens 15 Minuten, vorzugsweise mindestens 30 Minuten und in besonders bevorzugter Weise mindestens eine Stunde sowie im Allgemeinen höchstens 10 Stunden, vorzugsweise höchstens 8 Stunden und in besonders bevorzugter Weise höchstens 6 Stunden. In der Ausführungsform, in der das erfindungsgemäße Verfahren mit der Fällung von PCC kombiniert ist, ist es üblicherweise nicht erforderlich, diese Behandlungsdauern additiv zu den typischen Reaktionsdauern bei der PCC-Herstellung anzuwenden. Es genügt, die Gesamtreaktionsdauer von PCC-Fällung und Bleichung ausreichend lang zu wählen.

Sofern die Zugabe des Bleichmittels beim erfindungsgemäßen, mit der PCC-Herstellung kombinierten Verfahren zu mehreren Zeitpunkten erfolgt, wird die gesamte verwendete Bleichmittelmenge in mehrere Portionen aufgeteilt, die zu diesen unterschiedlichen Zeitpunkten zugegeben werden. Beispielsweise wird Kalkmilch bei einer Temperatur von mindestens 10°C, vorzugsweise mindestens 20°C und höchstens 90°C, vorzugsweise höchstens 50°C, mit einem Teil der Gesamtmenge Sulfinsäurederivat versetzt, anschließend ein Kohlendioxid enthaltendes Gas eingeleitet und dadurch PCC gefällt. Die dabei eingesetzte Teilmenge Bleichmittel ist eine beliebige Teilmenge der gesamten Bleichmittelmenge. Sie beträgt üblicherweise im Allgemeinen mindestens 10 Gew.-% der gesamten Bleichmittelmenge, vorzugsweise mindestens 20 Gew.-% und in besonders bevorzugter Weise mindestens 30 Gew.-% sowie im Allgemeinen höchstens 90 Gew.-%, vorzugsweise höchstens 80 Gew.-% und in besonders bevorzugter Weise höchstens 70 Gew.-%. Beispielsweise werden der Kalkmilch 50 Gew.-% der gesamten Bleichmittelmenge vor Einleiten eines Kohlendioxid enthaltenden Gases zugesetzt. Der restliche Teil Bleichmittel wird nach Abschluss der Gaseinleitung zugesetzt. Es ist jedoch ebenso möglich, die gesamte Bleichmittelmenge in drei Teilen vor, während und nach der Gaseinleitung zuzusetzen, ebenso sind eine Aufteilung in mehr als drei Portionen oder auch eine kontinuierliche Bleichmittelzugabe möglich.

### Beispiele

Nach den nachstehend beschriebenen Vorschriften (a), (b) und (c) wurde (a) ungebleichtes PCC der Firma Schaefer Kalk KG, Diez, Deutschland (das Produkt, das in gebleichter Form als PRECARB® 100 handelsüblich ist) mit einem anfänglichen Weißgrad von 94,20 mit dem erfindungsgemäß zu verwendenden Bleichmittel behandelt, (b) PCC durch Einleiten eines Kohlendioxid enthaltenden Gases in eine vorher mit Bleichmittel behandelte Kalkmilch hergestellt, und (c) PCC aus Kalkmilch durch Umsetzung mit Kohlendioxid frisch hergestellt und anschließende mit Bleichmittel behandelt.

Alle Weißgradmessungen erfolgten an im Mörser pulverisierten Proben nach einer Modifikation der DIN 53145, bei der nicht wie dort vorgegeben, Presslinge, sondern ungepresstes Pulver vermessen wurde. Die gemessenen Weißgrade sind daher gegenüber an Presslingen gemessenen Weißgraden zu niedrig.

Die Versuche wurden einerseits mit dem bei der Umsetzung von drei Äquivalenten eines Natriumhydroximethansulfinat/-sulfonatgemisches mit Ammoniak entstehenden Gemisch von Nitrilomethansulfinat/-sulfonaten ("Mischung", Versuche 1 - 12) und andererseits mit Natriumhydroximethansulfinat ("Rongalit C", Versuche 13 - 27) durchgeführt. Die Vergleichsversuche V1 - V12 wurden mit Natriumhydrosulfit ("Hydrosulfit") als Bleichmittel durchgeführt.

### Die Arbeitsvorschriften waren:

Vorschrift (a): 100 g einer PCC-Aufschlämmung in Wasser (15 Gew.-% PCC) werden bei 60°C mit dem Bleichmittel versetzt und gerührt. Nach 4 Stunden wird der Feststoff abfiltriert und getrocknet.

Vorschrift (b) : 100 g Kalkmilch (11 Gew.-% Calciumhydroxid in Wasser) werden unter Rühren mit dem Bleichmittel versetzt, dann wird ein CO₂/Luft-Gemisch [50 Vol.-% CO₂, 40 l/h] eingeleitet, wobei die Temperatur langsam über 1 h vom Startwert 30°C auf 65°C erhöht wird. Nach 1 weiteren Stunde bei 65°C wird der Feststoff abfiltriert und getrocknet.

Vorschrift (c): In 100 g Kalkmilch (11 Gew.-% Calciumhydroxid in Wasser) dann wird ein CO₂/Luft-Gemisch [50 Vol.-% CO₂, 40 l/h] eingeleitet, wobei die Temperatur langsam über 1 h vom Startwert 30°C auf 65°C erhöht wird. Anschließend wird unter Rühren mit dem Bleichmittel versetzt. Nach 1 weiteren Stunde bei 65°C wird der Feststoff abfiltriert und getrocknet.

Die angewendeten Bleichmittelkonzentrationen sind, jeweils in Gramm verwendetem Bleichmittel je 100 g Calciumcarbonat, in Tabelle 1 angegeben. Die eingesetzten Mengen wurden so gewählt, dass bei einer gegebenen Konzentration c1, c2, c3, c4 oder c5 identische Moläquivalente Sulfinat (also reduktionsaktive Moleküle oder Gruppen) in den eingesetzten Bleichmitteln vorhanden waren.

**Tabelle 1**

| Konzentration | Hydrosulfit | Mischung | Rongalit C |
|---|---|---|---|
| c1 | 0.37 | 0.97 | 1.24 |
| c2 | 0.74 | 1.95 | 2.48 |
| c3 | 1.11 | 2.93 | 3.6 |
| c4 | 1.48 | 3.66 | 4.96 |
| c5 | 2.22 | 5.84 | 7.44 |

Parameter und Ergebnisse der Beispiele 1-27 und Vergleichsbeispiele V1-V12 sind in der folgenden Tabelle 2 zusammengefasst. "n.b." bedeutet: "nicht bestimmt":

**Tabelle 2**

| (Vergleichs-) Beispiel Nr. | Vorschrift | Bleichmittel | Konz. | Weißgrad |
|---|---|---|---|---|
| V1 | a | Hydrosulfit | c1 | 95.4 |
| V2 | b | Hydrosulfit | c1 | 95.3 |
| V3 | c | Hydrosulfit | c1 | 95.7 |
| V4 | a | Hydrosulfit | c2 | 95.3 |
| V5 | b | Hydrosulfit | c2 | 94.8 |
| V6 | c | Hydrosulfit | c2 | 96.0 |
| V7 | a | Hydrosulfit | c4 | 95.0 |
| V8 | b | Hydrosulfit | c4 | 95.7 |
| V9 | c | Hydrosulfit | c4 | 95.8 |
| V10 | a | Hydrosulfit | c5 | 95.0 |
| V11 | b | Hydrosulfit | c5 | 95.7 |
| V12 | c | Hydrosulfit | c5 | 95.9 |
| 1 | a | Mischung | c1 | 90.7 |
| 2 | b | Mischung | c1 | 95.6 |
| 3 | c | Mischung | c1 | 96.1 |
| 4 | a | Mischung | c2 | 91.0 |
| 5 | b | Mischung | c2 | 95.7 |
| 6 | c | Mischung | c2 | 96.7 |
| 7 | a | Mischung | c4 | 92.2 |
| 8 | b | Mischung | c4 | 95.2 |
| 9 | c | Mischung | c4 | 95.8 |
| 10 | a | Mischung | c5 | 93.7 |
| 11 | b | Mischung | c5 | 95.4 |
| 12 | c | Mischung | c5 | 96.8 |
| 13 | a | Rongalit C | c1 | 91.4 |
| 14 | b | Rongalit C | c1 | 96.0 |
| 15 | c | Rongalit C | c1 | 96.6 |
| 16 | a | Rongalit C | c2 | 91.8 |
| 17 | b | Rongalit C | c2 | 96.7 |
| 18 | c | Rongalit C | c2 | 96.5 |
| 19 | a | Rongalit C | c3 | n. b. |
| 20 | b | Rongalit C | c3 | 95.8 |
| 21 | c | Rongalit C | c3 | 97.0 |
| 22 | a | Rongalit C | c4 | 95.8 |
| 23 | b | Rongalit C | c4 | 96.5 |
| 24 | c | Rongalit C | c4 | 97.0 |
| 25 | a | Rongalit C | c5 | 95.4 |
| 26 | b | Rongalit C | c5 | n. b. |
| 27 | c | Rongalit C | c5 | n. b. |

Die Beispiele zeigen, dass bei der Bleiche von PCC (Beispiele unter Anwendung von Vorschrift (a)) mit dem erfindungsgemäßen Verfahren sich im Gegensatz zum Stand der Technik (Hydrosulfit) der Weißgrad des PCC durch höhere Konzentrationen des Bleichmittels steigern lässt, und bei höheren Konzentrationen das erfindungsgemäße Verfahren (insbesondere bei Verwendung von Rongalit C) zu deutlich besseren Weißgraden des PCC führt als der Stand der Technik. Die Beispiele zeigen ferner, dass bei der Zugabe von Bleichmittel zur Kalkmilch vor Fällung des PCC (Beispiele unter Anwendung von Vorschrift (b)) mit dem erfindungsgemäßen Verfahren deutliche Steigerungen des Weißgrades gegenüber dem Stand der Technik (Bleiche des PCC mit Hydrosulfit) erreicht werden. Sie zeigen weiterhin, dass auch bei frisch gefälltem PCC (Beispiele unter Anwendung von Vorschrift (c)) das erfindungsgemäße Verfahren zu höheren Weißgraden führt als der Stand der Technik.

## Patentansprüche

1. Verfahren zur Herstellung von Calciumcarbonat mit hohem Weißgrad durch reduktive Bleichung mittels mindestens eines Sulfin- und/oder Sulfonsäurederivats, **dadurch gekennzeichnet, dass** man Calciumcarbonat und/oder die zu seiner Herstellung durch Umsetzung von Kalkmilch mit Kohlendioxid verwendete Kalkmilch und/oder mindestens eines der zur Herstellung der Kalkmilch verwendeten calciumhaltigen Vorprodukte vor, während und/oder nach dieser Umsetzung mit einem Bleichmittel behandelt, das mindestens eine Verbindung der Formel (I):
A[(CR¹R²)SOₚM_{(1/q)}]ᵣ (I)
enthält, wobei die Variablen
A NR³R⁴, NR³, N oder OH;
R¹, R², R³, R⁴ unabhängig voneinander Wasserstoff oder einen organischen Rest;
M Ammonium oder Metall
p 2 oder 3;
q die Wertigkeit von M; und
r für A = OH oder NR³R⁴ 1, für A=NR³ 2 und für A = N 3;
bedeuten, und wobei diese Variablen, falls ein Gemisch von Verbindungen verwendet wird und/oder r = 2 oder 3 ist, für jede einzelne Verbindung und/oder jede [(CR¹R²)SOₚM_{(1/q)}]-Gruppe unabhängig voneinander gewählt werden.

2. Verfahren nach Anspruch 1, **dadurch gekennzeichnet, dass** man das Bleichmittel der Kalkmilch vor ihrer Umsetzung mit Kohlendioxid zusetzt.

3. Verfahren nach Anspruch 2, **dadurch gekennzeichnet, dass** man sowohl der Kalkmilch vor ihrer Umsetzung mit Kohlendioxid als auch der durch die Umsetzung von Kalkmilch mit Kohlendioxid hergestellten Calciumcarbonatsuspension Bleichmittel zusetzt.

4. Verfahren nach Anspruch 1, **dadurch gekennzeichnet, dass** man so viel Bleichmittel zusetzt, dass mindestens 0,1 Gramm Verbindung oder Gemisch von Verbindungen der Formel (I) je Kilogramm Calciumcarbonat verwendet werden.

5. Verfahren nach Anspruch 1, **dadurch gekennzeichnet, dass** man die Behandlung mit Bleichmittel bei einer Temperatur im Bereich von mindestens 50 bis höchstens 90°C durchführt.

## Claims

1. A process for the preparation of calcium carbonate with high brightness by reductive bleaching by means of one sulfinic and/or sulfonic acid derivative, which comprises treating calcium carbonate and/or the milk of lime used for its preparation by reacting milk of lime with carbon dioxide, and/or at least one of the calcium-containing preliminary products used for the preparation of the milk of lime before, during and/or after this reaction with a bleaching agent which comprises at least one compound of the formula (I):
A[(CR¹R²)SOₚM_{(1/q)}]ᵣ (I)
where the variables have the following meanings:
A is NR³R⁴, NR³, N or OH;
R¹, R², R³, R⁴, independently of one another, are hydrogen or an organic radical;
M is ammonium or metal
p is 2 or 3;
q is the valency of M; and
r is 1 when A = OH or NR³R⁴, is 2 when A = NR³ and is 3 when A = N;
and where variables, if a mixture of compounds is used and/or r = 2 or 3, are chosen independently of one another for each individual compound and/or for each [(CR¹R²)SOₚM_{(1/q)}] group.

2. A process as claimed in claim 1, wherein the bleaching agent is added to the milk of lime prior to its reaction with carbon dioxide.

3. A process as claimed in claim 2, wherein bleaching agents are added both to the milk of lime prior to its reaction with carbon dioxide, and also to the calcium carbonate suspension prepared by the reaction of milk of lime with carbon dioxide.

4. A process as claimed in claim 1, wherein the amount of bleaching agent added is such that at least 0.1 gram of compound or mixture of compounds of the formula (I) are used per kilogram of calcium carbonate.

5. A process as claimed in claim 1, wherein the treatment with bleaching agent is carried out at a temperature in the range from at least 50 to at most 90°C.

## Revendications

1. Procédé de préparation de carbonate de calcium à degré de blanc élevé par décoloration réductrice au moyen d'au moins un dérivé d'acide sulfinique et/ou sulfonique, **caractérisé en ce qu'**on traite du carbonate de calcium et/ou le lait de chaux utilisé pour sa préparation par réaction de lait de chaux avec du dioxyde de carbone et/ou au moins un des progéniteurs contenant du calcium utilisés pour la préparation du lait de chaux, avant, pendant et/ou après cette réaction, avec un produit décolorant qui contient au moins un composé de la formule (I) :
A[(CR¹R²)SOₚM_{(1/q)}]ᵣ (I)
dans laquelle les variables signifient :
A NR³R⁴, NR³, N ou OH,
R¹, R², R³, R⁴ indépendamment les uns des autres, de l'hydrogène ou un radical organique,
M ammonium ou métal
p 2 ou 3,
q la valence de M, et
r 1 pour A = OH ou NR³R⁴, 2 pour A = NR³ et 3 pour A = N,
ces variables étant, dans le cas où un mélange de composés est utilisé et/ou r = 2 ou 3, choisies indépendamment les unes des autres pour chaque composé individuel et/ou chaque groupe [(CR¹R²) SOₚM_{(1/q)}].

2. Procédé suivant la revendication 1, **caractérisé en ce qu'**on ajoute le produit décolorant au lait de chaux avant sa réaction avec du dioxyde de carbone.

3. Procédé suivant la revendication 2, **caractérisé en ce qu'**on ajoute du produit décolorant, non seulement au lait de chaux avant sa réaction avec du dioxyde de carbone, mais aussi à la suspension de carbonate de calcium préparée par la réaction de lait de chaux avec du dioxyde de carbone.

4. Procédé suivant la revendication 1, **caractérisé en ce qu'**on ajoute du produit décolorant au point qu'on utilise au moins 0,1 gramme du composé ou mélange de composés de la formule (I) par kilogramme de carbonate de calcium.

5. Procédé suivant la revendication 1, **caractérisé en ce qu'**on effectue le traitement avec du produit décolorant à une température de l'ordre d'au moins 50 à au maximum 90°C.
